(19)

Europäisches
Patentamt
European
Patent Office
Office européen
des brevets

(11) **EP 4 715 971 A1**

(12) **EUROPEAN PATENT APPLICATION**

(43) Date of publication:
**25.03.2026 Bulletin 2026/13**

(21) Application number: **25203201.6**

(22) Date of filing: **18.09.2025**

(51) International Patent Classification (IPC):
***H01M 50/105*** (2021.01)    ***H01M 50/124*** (2021.01)
***H01M 50/131*** (2021.01)    ***H01M 50/126*** (2021.01)
***H01M 10/653*** (2014.01)

(52) Cooperative Patent Classification (CPC):
**H01M 50/105; H01M 50/124; H01M 50/126;**
**H01M 50/131; H01M 10/653; Y02E 60/10**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.09.2024 CN 202411306503**

(71) Applicants:
• **Ningde Amperex Technology Ltd.**
**Ningde City, Fujian Province 352100 (CN)**

• **Dongguan Amperex Technology Limited**
**Dongguan City, Guangdong Province, PRC**
**523000 (CN)**

(72) Inventors:
• **HUANG, Zhiqi**
**Ningde City, Fujian Province, China, 352100 (CN)**
• **GUO, Peipei**
**Ningde City, Fujian Province, China, 352100 (CN)**

(74) Representative: **Icosa**
**83 avenue Denfert-Rochereau**
**75014 Paris (FR)**

(54) **PACKAGING BAG, SECONDARY BATTERY, AND ELECTRONIC DEVICE**

(57)    This application discloses a packaging bag (10), a secondary battery (100), and an electronic device, where the packaging bag (10) includes an encapsulation layer (11), a metal layer (12), an adhesive layer (13), and a packaging layer (14) arranged in a stacked manner. The adhesive layer (13) includes a first thermally conductive material (131), where a mass percentage of the first thermally conductive material (131) in the adhesive layer (13) is denoted as G1, and $1\% \leq G1 \leq 30\%$. By incorporating the first thermally conductive material (131) into the adhesive layer (13), heat generated during operation of the secondary battery (100) can be more effectively conducted away, mitigating temperature rise inside the secondary battery (100), thereby improving the performance and safety of the secondary battery (100). Additionally, this enables more uniform heat distribution between the interior of the secondary battery (100) and the packaging bag (10), reducing localized overheating and extending the service life of the secondary battery (100).

FIG. 5

EP 4 715 971 A1

**Description**

**TECHNICAL FIELD**

This application relates to the field of battery technology, and in particular, to a packaging bag, a secondary battery, and an electronic device.

**BACKGROUND**

With the further expansion of the market for secondary pouch batteries, such as in fields like mobile charging (electric vehicles), agricultural drones, and low-altitude aircraft, the demand for improved charge-discharge rates of secondary batteries is becoming increasingly urgent.

For heat dissipation in secondary pouch batteries, it is common to add metal heat sinks or liquid cooling tubes on the outer surface of the packaging bag. However, metal heat sinks and liquid cooling tubes occupy space, which affects the energy density of the secondary batteries. Moreover, for specific small-power and consumer electronic secondary batteries, it is difficult to incorporate metal sheets or liquid cooling components, resulting in poor heat dissipation performance of these secondary batteries.

**SUMMARY**

This application aims to provide a packaging bag, a secondary battery, and an electronic device capable of improving the heat dissipation performance of the secondary battery.

Some embodiments of this application adopt the following technical solutions to address the technical issues.

According to a first aspect, this application provides a packaging bag, where the packaging bag includes an encapsulation layer, a metal layer, an adhesive layer, and a packaging layer arranged in a stacked manner. The adhesive layer includes a first thermally conductive material, a mass percentage of the first thermally conductive material in the adhesive layer is denoted as $G_1$, and $1\% \leq G_1 \leq 30\%$.

In the above technical solution, by incorporating the first thermally conductive material into the adhesive layer, heat generated during operation of the secondary battery can be more effectively conducted away, mitigating temperature rise inside the secondary battery, thereby improving the performance and safety of the secondary battery. Additionally, multiple first thermally conductive materials form multiple heat dissipation channels in the adhesive layer, enabling more uniform heat distribution between the interior of the secondary battery and the packaging bag, reducing localized overheating, and extending the service life of the secondary battery. In addition, the first thermally conductive material is directly incorporated into the adhesive layer without occupying additional space or occupying small space, resulting in a negligible impact on the energy density of the secondary battery. Furthermore, by limiting $1\% \leq G_1 \leq 30\%$, the thermal conductivity of the adhesive layer can be enhanced while the adhesive layer maintains superior adhesion performance, improving the heat dissipation performance of the packaging bag and increasing the bonding strength between the layers of the packaging bag.

In some preferred embodiments, $10\% \leq G_1 \leq 20\%$, which can improve the heat dissipation performance of the packaging bag while enhancing the bonding strength between the layers of the packaging bag.

In some preferred embodiments, the packaging layer includes a thermally conductive layer and a surface layer arranged in a stacked manner, where the thermally conductive layer is located between the surface layer and the adhesive layer. The thermally conductive layer includes a second thermally conductive material, a mass percentage of the second thermally conductive material in the thermally conductive layer is denoted as $G_2$, and $1\% \leq G_2 \leq 30\%$. By incorporating the second thermally conductive material into the thermally conductive layer, heat generated during operation of the secondary battery can be more effectively conducted away, forming a heat transfer channel for the encapsulation layer, metal layer, adhesive layer, and packaging layer, and mitigating temperature rise inside the secondary battery, thereby improving the performance and safety of the secondary battery. Additionally, multiple second thermally conductive materials form multiple heat dissipation channels in the packaging layer, enabling more uniform heat distribution between the interior of the secondary battery and the packaging bag, reducing localized overheating, and extending the service life of the secondary battery. In addition, the adhesive layer including the first thermally conductive material is disposed between the metal layer and the packaging layer, and the first thermally conductive material forms a heat transfer path between the metal layer and the packaging layer, further facilitating fast heat transfer between the metal layer and the packaging layer, thereby further improving the heat dissipation performance of the packaging bag.

In some preferred embodiments, the metal layer includes a first surface facing the encapsulation layer and a second surface facing the adhesive layer. A roughness of the first surface is denoted as $R_{Z1}$, and $2\,\mu m \leq R_{Z1} \leq 5\,\mu m$; and/or, a roughness of the second surface is denoted as $R_{Z2}$, and $2\,\mu m \leq R_{Z2} \leq 5\,\mu m$. By increasing the roughness of the first surface and/or the second surface, the bonding strength between the metal layer and the encapsulation layer and/or the adhesive layer can be enhanced, improving encapsulation reliability. This can effectively reduce layer separation due to external forces, temperature changes, or chemical effects during use of the secondary battery, enabling the secondary battery to remain in a well-sealed state all the time and reducing the risk of internal short circuits caused by layer separation of the packaging bag. Additionally, this improves the performance stability of the secondary battery and reduces issues such as internal resistance changes and capacity degradation due to the layer separation of the packaging bag.

Furthermore, by increasing the roughness of the first surface, a heat exchange area between the metal layer and the encapsulation layer is increased, facilitating faster transfer of heat generated during operation of the secondary battery from the encapsulation layer to the metal layer, thereby improving the heat dissipation performance of the packaging bag. By increasing the roughness of the second surface, the heat exchange area between the metal layer and the adhesive layer is increased, enabling faster transfer of heat generated during operation of the secondary battery from the encapsulation layer to the metal layer and the adhesive layer, further enhancing the heat dissipation performance of the packaging bag.

In some preferred embodiments, a peel strength between the metal layer and the packaging layer is denoted as F, and $4.1\,\text{N}/15\,\text{mm} \le F \le 7.4\,\text{N}/15\,\text{mm}$. By increasing the surface roughness of the metal layer, the bonding strength between the metal layer and the adhesive layer can be enhanced, increasing the peel strength between the metal layer and the packaging layer, thereby effectively improving the encapsulation reliability of the packaging bag.

In some preferred embodiments, a thickness of the metal layer is denoted as $T_1$, a thickness of the packaging bag is denoted as T, and $20\% \le T_1/T \le 70\%$. By limiting $T_1/T \ge 20\%$, the heat dissipation performance of the packaging bag can be improved while the packaging bag has high mechanical strength. Additionally, $T_1/T \le 70\%$, reducing the impact on the weight and flexibility of the packaging bag.

In some preferred embodiments, $30\% \le T_1/T \le 60\%$. The configuration of increasing the roughness of the metal layer can improve the heat dissipation performance of the packaging bag. Therefore, the thickness of the metal layer can be further reduced, thereby increasing the energy density of the secondary battery.

In some preferred embodiments, a thickness of the adhesive layer is denoted as $T_2$, a thickness of the packaging bag is denoted as T, and $1\% \le T_2/T \le 7\%$, which can enhance the adhesion strength while reducing the impact of the adhesive layer on the dimensional accuracy and thermal expansion differences of the secondary battery.

In some preferred embodiments, a thickness of the packaging layer is denoted as $T_3$, a thickness of the packaging bag is denoted as T, and $3\% \le T_3/T \le 40\%$, which can provide the packaging bag with superior protective capabilities while improving the heat dissipation performance of the packaging bag.

In some preferred embodiments, the packaging layer further includes an inner layer, where the inner layer is disposed on a surface of the thermally conductive layer facing the adhesive layer. The provision of the inner layer can facilitate adhesion between the adhesive layer and the packaging layer, enhancing the adhesion strength.

In some preferred embodiments, a thickness of the inner layer is denoted as $T_4$, a thickness of the packaging layer is denoted as $T_3$, and $1\% \le T_4/T_3 \le 10\%$, which can enhance the bonding strength between the packaging layer and the adhesive layer while reducing the impact on the energy density of the secondary battery.

In some preferred embodiments, the inner layer includes at least one of nylon, polyethylene terephthalate, polybutylene terephthalate, or polyimide.

In some preferred embodiments, the first thermally conductive material includes at least one of graphite, conductive carbon fiber, conductive nanotubes, graphene, or metal powder.

In some preferred embodiments, the second thermally conductive material includes at least one of graphite, conductive carbon fiber, conductive nanotubes, graphene, or metal powder.

This application further proposes a packaging bag, where the packaging bag includes an encapsulation layer, a metal layer, an adhesive layer, and a packaging layer arranged in a stacked manner. The packaging layer includes a thermally conductive layer and a surface layer arranged in a stacked manner, where the thermally conductive layer is located between the surface layer and the adhesive layer. The thermally conductive layer includes a second thermally conductive material, a mass percentage of the second thermally conductive material in the thermally conductive layer is denoted as $G_2$, and $1\% \le G_2 \le 30\%$.

This application further provides another packaging bag, including an encapsulation layer, a metal layer, an adhesive layer, and a packaging layer arranged in a stacked manner. The metal layer includes a first surface facing the encapsulation layer and a second surface facing the adhesive layer. A roughness of the first surface is denoted as $R_{Z1}$, and $2\,\mu\text{m} \le R_{Z1} \le 5\,\mu\text{m}$; and/or, a roughness of the second surface is denoted as $R_{Z2}$, and $2\,\mu\text{m} \le R_{Z2} \le 5\,\mu\text{m}$.

According to a second aspect, this application further provides a secondary battery, including an electrode assembly, a tab, and the packaging bag according to any embodiment of the first aspect. The packaging bag encloses an accommodating cavity, the electrode assembly is disposed in the accommodating cavity of the packaging bag, one end of the tab is electrically connected to the electrode assembly, and the other end of the tab extends out of the packaging bag.

According to a third aspect, this application further proposes an electronic device, including the secondary battery according to any embodiment of the second aspect, where the secondary battery is configured to supply power to the electronic device.

Additional aspects and advantages of some embodiments of this application will be partially described or illustrated in the following description or elucidated through the implementation of some embodiments of this application.

## BRIEF DESCRIPTION OF THE DRAWINGS

One or more embodiments are exemplarily illustrated by corresponding drawings, which do not limit these embodiments. Elements with the same reference numerals in the drawings are denoted as similar elements, and unless otherwise specified, the drawings do not constitute a scale limitation.

FIG. 1 is a schematic structural diagram of each layer of a packaging bag according to some embodiments of this application.
FIG. 2 is a schematic structural diagram of a secondary battery according to some embodiments of this application.
FIG. 3 is an exploded view of a secondary battery according to some embodiments of this application.
FIG. 4 is a schematic structural diagram of each layer of a first bag body and a second bag body according to some embodiments of this application.
FIG. 5 is a schematic structural diagram of a portion of each layer of a packaging bag according to some embodiments of this application.
FIG. 6 is a schematic structural diagram of an adhesive layer according to some embodiments of this application.
FIG. 7 is a schematic structural diagram of a portion of each layer of a packaging bag according to some embodiments of this application.
FIG. 8 is a schematic structural diagram of a packaging layer according to some embodiments of this application.
FIG. 9 is a schematic structural diagram of a portion of each layer of a packaging bag according to some embodiments of this application.
FIG. 10 is a schematic structural diagram of a packaging layer according to some embodiments of this application.

Description of reference signs:

100. secondary battery;
10. packaging bag;
10a. first bag body; 10b. second bag body; 10c. accommodating cavity; 10c1. first pit cavity; 10c2. second pit cavity;
10d. sealing edge structure;
11. encapsulation layer; 11a. first encapsulation layer; 11b. second encapsulation layer;
12. metal layer; 12a. first metal layer; 12b. second metal layer; 121. first surface; 122. second surface;
13. adhesive layer; 131. first thermally conductive material; 13a. first adhesive layer; 13b. second adhesive layer;
14. packaging layer; 14a. first packaging layer; 14b. second packaging layer; 141. thermally conductive layer; 1411. second thermally conductive material; 142. surface layer; 143. inner layer;
20. electrode assembly; and
30. tab.

## DETAILED DESCRIPTION

To make the objectives, technical solutions, and advantages of some embodiments of this application clearer, the technical solutions in some embodiments of this application will be described clearly with reference to the drawings in some embodiments of this application. Obviously, the described embodiments are some embodiments rather than all embodiments of this application.

References to "embodiments" in this application mean that specific features, structures, or characteristics described in connection with some embodiments may be included in at least one embodiment of this application. The appearance of this phrase in various places in the specification does not necessarily refer to the same embodiment, nor is it an independent or alternative embodiment mutually exclusive with other embodiments.

In the description of some embodiments of this application, technical terms such as "first" and "second" are used only to distinguish between different objects and should not be understood as indicating or implying relative importance or implicitly indicating the number, specific order, or primary-secondary relationship of the indicated technical features. In the description of some embodiments of this application, "multiple" means two or more, unless explicitly and specifically limited otherwise.

In the description of some embodiments of this application, the term "and/or" merely describes an association relationship between associated objects, indicating that three relationships may exist. For example, A and/or B may indicate three cases: only A is present, A and B are both present, or only B is present. Additionally, the character "/" in this document generally indicates an "or" relationship between the contextually associated objects.

The technical features involved in different embodiments of this application described below can be combined with each other as long as they do not conflict with each other.

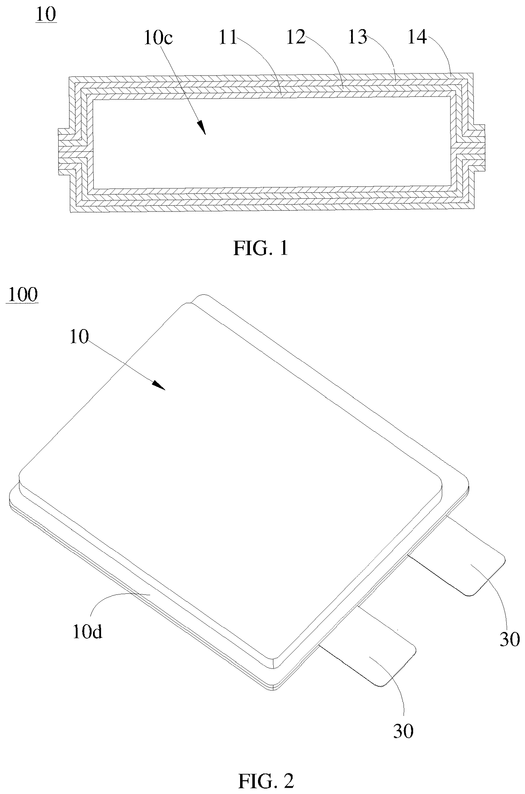

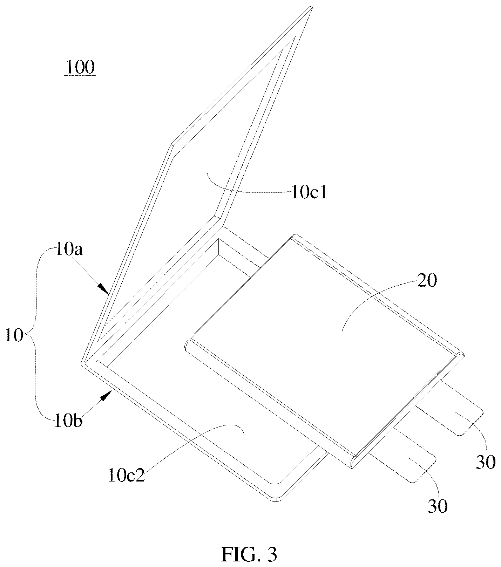

According to a first aspect, this application provides a packaging bag 10, where the packaging bag 10 serves as an encapsulation structure for a secondary pouch battery 100, capable of providing sealing protection, insulation protection, and mechanical support for the secondary battery 100. In an unused state, the packaging bag 10 may exhibit a flat structure, where the packaging bag 10 includes an encapsulation layer 11, a metal layer 12, an adhesive layer 13, and a packaging layer 14 arranged in a stacked manner. During use of the packaging bag 10, referring to FIG. 1 to FIG. 3, the packaging bag 10 may be stamped to form an accommodating cavity 10c, where the accommodating cavity 10c can accommodate an electrode assembly 20 and an electrolyte (not shown in the figures) of the secondary battery 100. The packaging bag 10 includes the encapsulation layer 11, the metal layer 12, the adhesive layer 13, and the packaging layer 14 arranged in a stacked manner, where the encapsulation layer 11 is disposed close to and facing the accommodating cavity 10c, and the packaging layer 14 is disposed away from the accommodating cavity 10c, and the packaging layer 14 can form an outer surface of the packaging bag 10.

In some embodiments, the packaging bag 10 includes a first bag body 10a and a second bag body 10b arranged opposite each other, where the first bag body 10a is provided with a first pit cavity 10c1, and the second bag body 10b is provided with a second pit cavity 10c2. The secondary battery 100 further includes a tab 30. The electrode assembly 20 may first be placed in the first pit cavity 10c1 or the second pit cavity 10c2, where one end of the tab 30 is electrically connected to the electrode assembly 20 and the other end extends out of the first pit cavity 10c1 and the second pit cavity 10c2. The second pit cavity 10c2 of the second bag body 10b is arranged opposite the first pit cavity 10c1. By hot-pressing of edges of the first bag body 10a and the second bag body 10b, the first bag body 10a and the second bag body 10b can be connected, and the first pit cavity 10c1 communicates with the second pit cavity 10c2 to form the accommodating cavity 10c.

In some other embodiments, the second bag body 10b may not be provided with the second pit cavity 10c2, and the second bag body 10b may directly adopt a flat structure, directly covering the pit cavity of the first bag body 10a. After hot-pressing encapsulation, the first pit cavity 10c1 can directly form the accommodating cavity 10c. Alternatively, the first bag body 10a may not be provided with the first pit cavity 10c1, and only the second bag body 10b is provided with the second pit cavity 10c2, where the second pit cavity 10c2 forms the accommodating cavity 10c.

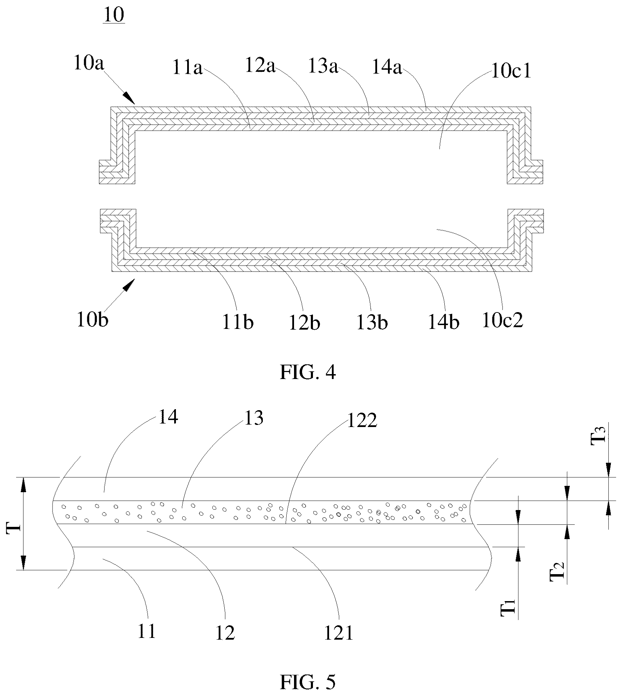

The first bag body 10a and the second bag body 10b each include an encapsulation layer 11, a metal layer 12, an adhesive layer 13, and a packaging layer 14 arranged in a stacked manner. For example, further referring to FIG. 4, the first bag body 10a includes a first encapsulation layer 11a, a first metal layer 12a, a first adhesive layer 13a, and a first packaging layer 14a, and the second bag body 10b includes a second encapsulation layer 11b, a second metal layer 12b, a second adhesive layer 13b, and a second packaging layer 14b. During hot-pressing encapsulation, the first encapsulation layer 11a faces the second encapsulation layer 11b, and hot-pressing encapsulation can be performed directly at the edges of the first bag body 10a and the second bag body 10b, so that the first encapsulation layer 11a is adhered to the second encapsulation layer 11b, enabling the first bag body 10a and the second bag body 10b to form a complete packaging bag 10. After hot pressing, the edges of the first bag body 10a and the second bag body 10b form a sealing edge structure 10d of the packaging bag 10, for enhancing the airtightness of the secondary battery 100.

Regarding the encapsulation layer 11, referring to FIG. 1, the encapsulation layer 11 is disposed facing the accommodating cavity 10c, and the encapsulation layer 11 is a part in direct contact with the electrolyte. The encapsulation layer 11 may be made of cast polypropylene, blow-molded polypropylene, linear low-density polyethylene, or ethylene-methacrylate copolymer, offering excellent heat-sealing performance and chemical resistance stability, which enhances the airtightness of the secondary battery 100 while reducing corrosion of the packaging bag 10 by the electrolyte.

Regarding the metal layer 12, referring to FIG. 1, the metal layer 12 is disposed on a side of the encapsulation layer 11 facing away from the accommodating cavity 10c. The metal layer 12 may be made of metal materials such as aluminum, copper, or stainless steel. The metal layer 12 can enhance the mechanical strength of the packaging bag 10, providing a certain degree of rigidity and tensile resistance for the packaging bag, and making the packaging bag 10 less prone to deformation or rupture under external forces. For example, when the secondary battery 100 drops or is compressed, the metal layer 12 can withstand large pressure to protect an internal structure. Additionally, the metal layer 12 also has excellent thermal conductivity, facilitating fast transfer of heat generated during operation of the secondary battery 100 to the outside, reducing excessive internal temperatures of the secondary battery 100, and ensuring safe use of the secondary battery 100.

The metal layer 12 is isolated from the electrolyte inside the secondary battery 100 by the encapsulation layer 11. Detachment of the encapsulation layer 11 from the metal layer 12 may lead to corrosion of the metal layer 12 by the electrolyte or even cause a short circuit due to direct contact between the metal layer 12 and positive and negative electrodes of the secondary battery 100.

To enhance the bonding strength between the metal layer 12 and the encapsulation layer 11, in some embodiments of this application, referring to FIG. 5, the metal layer 12 includes a first surface 121 facing the encapsulation layer 11 and a second surface 122 facing the adhesive layer 13. A roughness of the first surface 121 is denoted as $R_{Z1}$, and

$2 \mu m \leq R_{Z1} \leq 5 \mu m$. By increasing the roughness of the first surface 121 of the metal layer 12, a contact area and a friction force between the metal layer 12 and the encapsulation layer 11 can be increased, thereby enhancing the bonding strength between the metal layer 12 and the encapsulation layer 11.

Similarly, a roughness of the second surface 122 is denoted as $R_{Z2}$, and $2 \mu m \leq R_{Z2} \leq 5 \mu m$. By increasing the roughness of the second surface 122 of the metal layer 12, a contact area and a friction force between the metal layer 12 and the adhesive layer 13 can be increased, enabling more stable adhesion between the adhesive layer 13 and the metal layer 12. For example, a rough second surface 122 can provide more anchoring points, helping to enhance an adhesion effect and reducing the risk of layer separation.

Thus, by increasing the roughness of the first surface 121 and/or the second surface 122, the bonding strength between the metal layer 12 and the encapsulation layer 11 and/or the adhesive layer 13 can be enhanced, improving the encapsulation reliability. This effectively reduces layer separation due to external forces, temperature changes, or chemical effects during use of the secondary battery 100, ensuring that the secondary battery 100 remains in a well-sealed state all the time and reducing the risk of internal short circuits caused by layer separation of the packaging bag 10. Additionally, this improves the performance stability of the secondary battery 100 and reduces issues such as internal resistance changes and capacity degradation due to the separation in the packaging bag 10.

For heat dissipation of the metal layer 12, the thermal conductivity of the packaging bag 10 can be enhanced by increasing the thickness of the metal layer 12. However, a thicker metal layer 12 requires more material use, increasing the material cost of the packaging bag 10, and also reduces the flexibility of the packaging bag 10, so that the entire packaging bag 10 is more difficult to bend, leading to poor flexibility and adaptability of the secondary battery 100 during assembly. Furthermore, the weight of the packaging bag 10 is increased, making it unsuitable for application scenarios with strict weight requirements. For example, in a secondary battery 100 in a portable electronic device, an excessively thick metal layer 12 adds unnecessary weight.

The inventors of this application have also found through research that increasing the roughness of the first surface 121 increases a heat exchange area between the metal layer 12 and the encapsulation layer 11, facilitating faster transfer of heat generated during operation of the secondary battery 100 from the encapsulation layer 11 to the metal layer 12, thereby improving the heat dissipation performance of the packaging bag 10. For example, micro concave-convex structures can be formed on the first surface 121 of the metal layer 12 through processes such as sandblasting or laser etching, and the micro concave-convex structures can increase a contact area between the metal layer 12 and the encapsulation layer 11 and improve heat transfer efficiency, thereby mitigating temperature rise during operation of the secondary battery 100. Similarly, the second surface 122 increases a heat exchange area between the metal layer 12 and the adhesive layer 13, facilitating faster transfer of heat generated during operation of the secondary battery 100 from the encapsulation layer 11 to the metal layer 12 and the adhesive layer 13, thereby further enhancing the heat dissipation performance of the packaging bag 10.

It should be noted that roughness Rz refers to a maximum profile height. A cross-section of the packaging bag 10 is obtained using an argon ion polisher, for measurement of a roughness. Rz is a distance between a profile peak line and a profile valley line within one sampling length, where five maximum profile peak heights and five maximum profile valley depths are measured, and then an average of these five peak heights is added to an average of these five valley depths to obtain Rz.

In this application, limiting $R_{Z1} \geq 2 \mu m$ increases a contact area between the metal layer 12 and the encapsulation layer 11, enhancing the heat dissipation effect. The inventors of this application have also found through research that although increasing the surface roughness of the metal layer 12 can enhance the bonding strength between the metal layer 12 and the encapsulation layer 11, if the roughness exceeds a specific threshold, it is difficult for the encapsulation layer 11 to fully fill the concave-convex structures on the surface of the metal layer 12, leading to failure of an adhesive interface. Additionally, an excessively large roughness reduces the stamping capability of the packaging bag 10. In this application, limiting $2 \mu m \leq R_{Z1} \leq 5 \mu m$ can enhance the heat dissipation effect of the packaging bag 10 while enhancing the bonding strength between the metal layer 12 and the encapsulation layer, reducing the impact on the stamping performance of the packaging bag 10.

Based on the same inventive concept, a roughness of the second surface 122 is denoted as $R_{Z2}$, and limiting $2 \mu m \leq R_{Z2} \leq 5 \mu m$ can enhance the heat dissipation effect of the packaging bag 10 while enhancing the bonding strength between the metal layer 12 and the adhesive layer 13, reducing the impact on the stamping performance of the packaging bag 10.

Optionally, a peel strength between the metal layer 12 and the packaging layer 14 is denoted as F, and 4.1 N/15 mm $\leq$ F $\leq$ 7.4 N/15 mm. The bonding strength between the metal layer 12 and the adhesive layer 13 can be enhanced by increasing the surface roughness of the metal layer 12, so that the peel strength between the metal layer 12 and the packaging layer 14 can be enhanced, thereby effectively improving the encapsulation reliability of the packaging bag.

Regarding a thickness of the metal layer 12, referring to FIG. 5, the thickness of the metal layer 12 is denoted as $T_1$, and a thickness of the packaging bag 10 is denoted as T. In this application, limiting $T_1/T \geq 20\%$ can improve the heat dissipation performance of the packaging bag 10 while ensuring that the packaging bag 10 has superior mechanical

strength. Additionally, $T_1/T \leq 70\%$, reducing the impact on the weight and flexibility of the packaging bag 10.

The configuration of increasing roughness of the metal layer 12 can improve the heat dissipation performance of the packaging bag 10. Therefore, the thickness of the metal layer 12 can be further reduced, thereby increasing the energy density of the secondary battery 100. In this application, limiting $30\% \leq T_1/T \leq 60\%$ can improve the heat dissipation performance of the packaging bag 10 while reducing material costs and reducing the impact on the flexibility and weight of the packaging bag 10.

Regarding the adhesive layer 13, referring to FIG. 1, the adhesive layer 13 is located between the metal layer 12 and the packaging layer, and is configured to enhance the overall bonding strength of the packaging bag 10. The adhesive layer 13 may use a polyurethane (PU) adhesive, an acrylate adhesive, an epoxy adhesive, or an organosilicone adhesive. For example, taking the polyurethane (PU) adhesive as an example, the polyurethane (PU) adhesive has excellent adhesion performance, flexibility, and chemical corrosion resistance, and the PU adhesive can exhibit an outstanding effect in packaging bags 10 for secondary batteries 100 with high requirements on adhesion strength and weather resistance.

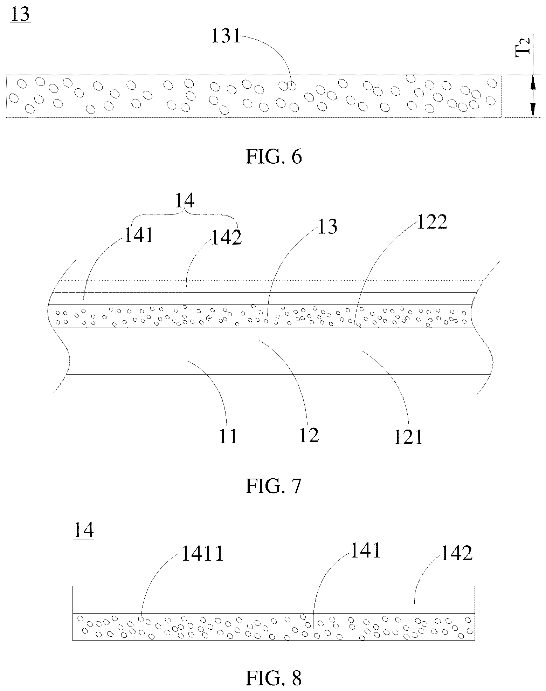

In some embodiments of this application, referring to FIG. 5 and FIG. 6, the adhesive layer 13 includes a first thermally conductive material 131, a mass percentage of the first thermally conductive material 131 in the adhesive layer 13 is denoted as $G_1$, and $1\% \leq G_1 \leq 30\%$. By incorporating the first thermally conductive material 131 into the adhesive layer 13, heat generated during operation of the secondary battery 100 can be more effectively conducted away, mitigating temperature rise inside the secondary battery 100, thereby improving the performance and safety of the secondary battery 100. Additionally, multiple first thermally conductive materials 131 form multiple heat dissipation channels in the adhesive layer 13, enabling more uniform heat distribution between the interior of the secondary battery 100 and the packaging bag 10, reducing localized overheating, and extending the service life of the secondary battery 100. For example, the adhesive layer 13 including the first thermally conductive material 131 can rapidly conduct heat from heat concentration points to cooler regions, maintaining overall temperature balance in the secondary battery 100.

Preferably, $10\% \leq G_1 \leq 20\%$, which can improve the heat dissipation performance of the packaging bag 10 while enhancing the bonding strength between the layers of the packaging bag 10.

In addition, the first thermally conductive material 131 is directly incorporated into the adhesive layer 13 without occupying additional space or occupying small space, resulting in a negligible impact on the energy density of the secondary battery 100. Furthermore, in this application, limiting $G_1 \geq 1\%$ enhances the thermal conductivity of the adhesive layer 13, thereby enhancing the heat dissipation effect of the packaging bag 10. However, an excessively high percentage of the first thermally conductive material 131 may affect the adhesion performance. In this application, limiting $1\% \leq G_1 \leq 30\%$ can enhance the thermal conductivity of the adhesive layer 13 while ensuring that the adhesive layer 13 maintains superior adhesion performance. With reference to the foregoing embodiments in which the roughness of the metal layer 12 is described, the bonding strength between the adhesive layer 13 and the metal layer 12 can be effectively enhanced.

The first thermally conductive material 131 may include at least one of graphite, conductive carbon fiber, conductive nanotubes, graphene, or metal powder.

Regarding a measurement method of the mass percentage of the first thermally conductive material 131 in the adhesive layer 13, in this application, a solvent extraction method can be used for calibration. The packaging bag 10 is weighed ($W_1$) and placed in water at approximately 85°C, and boiled for about 4 hours; the metal layer 12 and the packaging layer 14 are separated; a portion of the adhesive layer 13 is adhered to the metal layer 12, and another portion of the adhesive layer 13 is adhered to the packaging layer 14; acetone is used to dissolve the portions of the adhesive layer 13 adhered to the packaging layer 14 and the metal layer 12; the packaging layer 14, the metal layer 12, and the encapsulation layer 11 are dried and weighed, with the weight of the packaging layer 14 being recorded as $W_2$ and the weight of the metal layer 12 and encapsulation layer 11 being recorded as $W_3$; a suspended matter collected from the acetone solution is extracted to obtain a solid material, which is the first thermally conductive material 131; and the first thermally conductive material is dried and weighed as $W_4$. Thus, the mass percentage of the first thermally conductive material 131 in the adhesive layer is $W_4/(W_1 - W_2 - W_3) * 100\%$.

Regarding a thickness of the adhesive layer 13, referring to FIG. 5 and FIG. 6, the thickness of the adhesive layer 13 is denoted as $T_2$, and a thickness of the packaging bag 10 is denoted as T, where $1\% \leq T_2/T \leq 7\%$. If the thickness of the adhesive layer 13 is too small, the adhesion strength is insufficient, making it difficult to provide a sufficient adhesion force and easily causing layer separation. If the thickness of the adhesive layer 13 is too large, flow casting may occur during hot-pressing encapsulation, potentially affecting the dimensional accuracy of the secondary battery 100, and causing the overall thickness of the packaging bag 10 to exceed designed specifications, thus affecting the installation and compatibility of the secondary battery 100 in devices. Additionally, a thick adhesive layer 13 increases thermal expansion differences. During temperature changes, a thermal expansion coefficient of the adhesive layer 13 differs from that of other layers, and an excessively thick adhesive layer 13 may exacerbate this difference, leading to increased interlayer stress and affecting structural stability. In this application, limiting the thickness of the adhesive layer 13 to satisfy $1\% \leq T_2/T \leq 7\%$ can enhance the adhesion strength while reducing the impact of the adhesive layer 13 on the dimensional accuracy and thermal expansion differences of the secondary battery 100.

Regarding the packaging layer 14, referring to FIG. 5, the packaging layer 14, as the outermost layer of the packaging bag 10, has excellent wear resistance and scratch resistance. During daily use and transfer of the secondary battery 100, the packaging layer 14 can protect an internal structure of the packaging bag 10 from friction and scratches by external objects, reducing damage to the packaging bag 10. Additionally, the packaging layer 14 has excellent waterproof and moisture-proof properties, preventing moisture from entering the packaging bag 10 and avoiding performance degradation of the secondary battery 100 due to moisture.

In some embodiments of this application, referring to FIG. 7, the packaging layer 14 includes a thermally conductive layer 141 and a surface layer 142 arranged in a stacked manner, where the thermally conductive layer 141 is located between the surface layer 142 and the adhesive layer 13. The surface layer 142 may be made of polyethylene terephthalate (PET), polycarbonate (PC), polyamide (PA), high-density polyethylene (HDPE), or polyvinylidene fluoride (PVDF), which can enhance the wear resistance of the packaging bag 10.

Further referring to FIG. 8, the thermally conductive layer 141 includes a second thermally conductive material 1411, a mass percentage of the second thermally conductive material 1411 in the thermally conductive layer 141 is denoted as $G_2$, and $1\% \leq G_2 \leq 30\%$. By incorporating the second thermally conductive material 1411 into the thermally conductive layer 141, heat generated during operation of the secondary battery 100 can be more effectively conducted away, forming a heat transfer channel for the encapsulation layer 11, metal layer 12, adhesive layer 13, and packaging layer 14, mitigating temperature rise inside the secondary battery 100, thereby improving the performance and safety of the secondary battery 100. Additionally, this enables more uniform heat distribution between the interior of the secondary battery 100 and the packaging bag 10, reducing localized overheating and extending the service life of the secondary battery 100.

The second thermally conductive material 1411 may include at least one of graphite, conductive carbon fiber, conductive nanotubes, graphene, or metal powder.

In this application, limiting $G_2 \geq 1\%$ enhances the thermal conductivity of the packaging layer 14. An excessively high percentage of the second thermally conductive material 1411 may lead to poor insulation performance of the packaging layer 14, increasing the risk of short circuits after the positive and negative electrodes of the secondary battery 100 are led out. In this application, limiting $1\% \leq G_2 \leq 30\%$ can enhance the thermal conductivity of the packaging layer 14 while reducing the risk of short circuits in the secondary battery 100. To enhance the bonding strength between the layers of the packaging bag 10, $10\% \leq G_2 \leq 20\%$ may also be selected.

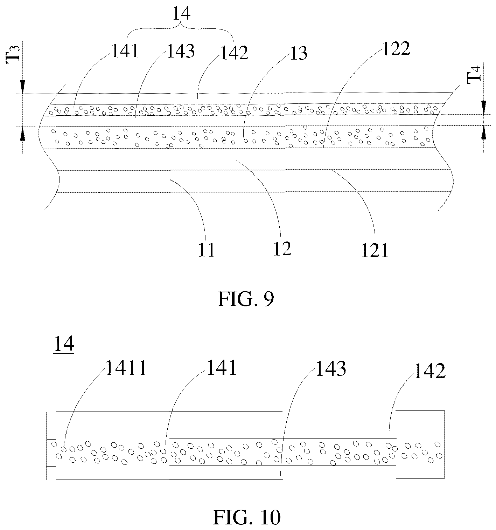

In some embodiments, referring to FIG. 9 and FIG. 10, the packaging layer 14 further includes an inner layer 143, where the inner layer 143 is disposed on a surface of the thermally conductive layer 141 facing the adhesive layer 13. The provision of the inner layer 143 can facilitate adhesion between the adhesive layer 13 and the packaging layer 14, enhancing the adhesion strength. The inner layer 143 includes at least one of nylon, polyethylene terephthalate, polybutylene terephthalate, or polyimide.

Regarding a measurement method of the second thermally conductive material 1411 in the packaging layer 14, a solvent extraction method can be used for calibration. The packaging bag 10 is placed in water at 85°C, and boiled for 4 hours; the metal layer 12 and the packaging layer 14 are separated; after the adhesive layer 13 and the surface layer 142 are cleaned with acetone, the thermally conductive layer 141 is weighed ($W_5$) and then dissolved in a hexafluoroisopropanol solution, where an insoluble matter is the second thermally conductive material 1411; after solid-liquid extraction, the obtained material is dried and weighed ($W_6$) to obtain a mass as the mass of the second thermally conductive material 1411. The mass percentage of the second thermally conductive material 1411 in the thermally conductive layer is $W_6/W_5 * 100\%$.

Regarding a thickness of the packaging layer 14, referring to FIG. 5, the thickness of the packaging layer 14 is denoted as $T_3$, and a thickness of the packaging bag 10 is denoted as T, where $3\% \leq T_3/T \leq 40\%$. An excessively small thickness of the packaging layer 14 results in insufficient protective capabilities, making it difficult to provide sufficient protective performance such as wear resistance, scratch resistance, UV resistance, and waterproof and moisture-proof properties. In addition, insufficient mechanical strength makes it difficult to withstand external compression and impact, resulting in a failure in effectively protecting the secondary battery 100. If the thickness of the packaging layer 14 is too large, as the outermost layer requires an insulating layer, the heat dissipation performance of the entire packaging bag 10 may be affected. In this application, limiting $3\% \leq T_3/T \leq 40\%$ can provide the packaging bag 10 with superior protective capabilities while improving the heat dissipation performance of the packaging bag 10.

Regarding a thickness of the inner layer 143 of the packaging layer 14, referring to FIG. 9, the thickness of the inner layer 143 is denoted as $T_4$, and a thickness of the packaging layer 14 is denoted as $T_3$, where $1\% \leq T_4/T_3 \leq 10\%$. An excessively small thickness of the inner layer 143 is not conducive to the adhesion with the adhesive layer 13. An excessively thick inner layer 143 occupies large space, affecting the energy density of the secondary battery 100. In this application, limiting $1\% \leq T_4/T_3 \leq 10\%$ can enhance the bonding strength between the packaging layer 14 and the adhesive layer 13 while reducing the impact on the energy density of the secondary battery 100.

According to a second aspect, this application further provides a secondary battery 100. Referring to FIG. 1 to FIG. 3, the secondary battery 100 includes an electrode assembly 20, a tab 30, and the packaging bag 10 according to any embodiment of the first aspect. The electrode assembly 20 is disposed in the accommodating cavity 10c of the packaging bag 10, one end of the tab 30 is electrically connected to the electrode assembly 20, and the other end of the tab 30 extends out of the packaging bag 10.

According to a third aspect, this application further provides an electronic device, including the secondary battery 100 according to any embodiment of the second aspect. The electronic device of this embodiment of this application is not particularly limited and may be any electronic device known in the prior art. For example, the electronic device includes, but is not limited to, Bluetooth headsets, mobile phones, tablets, laptops, electric toys, electric tools, electric bicycles, electric vehicles, ships, and spacecraft. Electric toys may include fixed or mobile electric toys, such as game consoles, electric toy cars, electric toy ships, and electric toy airplanes. Spacecraft may include airplanes, rockets, space shuttles, spaceships, and the like.

Experiment 1: Incorporation of first thermally conductive material into adhesive layer

Example A1: Preparation of lithium-ion battery

<Preparation of positive electrode plate>:

A positive electrode active material lithium iron phosphate, a positive electrode conductive agent acetylene black, and a positive electrode binder polyvinylidene fluoride (PVDF, with a weight-average molecular weight of $5 \times 10^5$) were mixed at a mass ratio of 94:3:3, and N-methylpyrrolidone (NMP) was added as a solvent to prepare a positive electrode slurry with a solid content of 75wt%, and the slurry was stirred uniformly in a vacuum mixer. An aluminum foil with a thickness of 10 $\mu$m was used as a positive electrode current collector, and the positive electrode slurry was uniformly applied onto one surface of the aluminum foil current collector, leaving an uncoated foil region that is not coated with the positive electrode slurry on the aluminum foil. Drying was performed at 110°C to obtain a positive electrode plate having one surface coated with the positive electrode active material layer. The above steps were repeated on the other surface of the aluminum foil to obtain a positive electrode plate having both surfaces coated with the positive electrode active material layer. A coating weight of the positive electrode plate was 20 mg/cm$^2$.

<Preparation of negative electrode plate>:

A negative electrode active material graphite powder, a conductive agent conductive carbon black (Super P), and a binder styrene-butadiene rubber (SBR) were mixed at a weight ratio of 97.5:1:1.5, and deionized water was added as a solvent to prepare a negative electrode slurry with a solid content of 50wt%, and the slurry was stirred uniformly. A copper foil with a thickness of 6 $\mu$m was used as a negative electrode current collector, and the negative electrode slurry was uniformly applied onto one surface of the copper foil current collector, leaving an uncoated foil region that is not coated with the negative electrode slurry on the copper foil. Drying was performed at 90°C to obtain a single-sided negative electrode plate. After the above steps were completed, single surface coating of the negative electrode plate was completed. The above steps were repeated on the other surface of the negative electrode plate to obtain a negative electrode plate having both surfaces provided with the negative electrode active material layer. A coating weight of the negative electrode plate was 6.5 mg/cm$^2$.

<Preparation of separator>:

A porous polyethylene (PE) film with a thickness of 8 $\mu$m was used as the separator.

<Preparation of electrolyte>:

In a dry argon atmosphere, ethylene carbonate, ethyl methyl carbonate, and diethyl carbonate were mixed at a mass ratio of 30:50:20 to obtain an organic solution. A lithium salt lithium hexafluorophosphate was added to the organic solution, dissolved, and mixed uniformly to obtain an electrolyte with a lithium salt concentration of 1.15 mol/L.

<Preparation of packaging bag>:

An aluminum foil was used as the metal layer. After passivation (a resin solution containing passivated metal deposited on a surface of the metal layer by coating) of the metal layer, a thermoplastic encapsulation layer resin was flow-cast on one surface of the metal layer, and an adhesive layer including a first thermally conductive material (conductive nanotube material) was applied into the other surface, where a mass percentage $G_1$ of the first thermally conductive material in the adhesive layer is 1%. After the solvent was dried, the packaging layer was adhered by hot pressing. After lamination and high-temperature curing, the prepared packaging bag material was obtained, and the packaging bag material was shaped and stamped to form a packaging bag. A total thickness T of the packaging bag was 100 $\mu$m, a thickness $T_1$ of the metal layer was 40 $\mu$m, a thickness $T_2$ of the adhesive layer was 5 $\mu$m, and a thickness $T_3$ of the packaging layer was 30 $\mu$m.

<Preparation of lithium-ion battery>:

A web was welded to the negative electrode plate, and the prepared separator, positive electrode plate, separator, and negative electrode plate were stacked in order and wound to obtain an electrode assembly. The electrode assembly was hot-pressed (pressure: 5 MPa; temperature: 65°C; and pressure holding time: 10s). The electrode assembly was placed in the packaging bag, and liquid injection and encapsulation were performed.

Lithium-ion battery surface temperature test method: The prepared lithium-ion battery was tested in an environment with a temperature of approximately 25°C, charged at 9C for 10%, at 7C to 20%, at 5C to 20%, and at 3C to 50%, and discharged at 0.5C to 3.0 V. A maximum surface temperature of the lithium-ion battery was measured during this process.

Peel strength test: A sample with size of 15 mm × 100 mm was cut from the packaging bag, and the encapsulation layer and the metal layer were cut along a width direction of the sample. The packaging layer and the metal layer were manually separated. A tensile testing machine was used, with one end clamping the packaging layer, and the other end clamping the metal layer. The tensile testing machine was set to a speed of 50 mm/min, and the sample was pulled until the metal layer and the packaging layer were completely separated. An average tensile force f (measured in N) during the separation process was recorded, and the peel strength between the metal layer and the packaging layer was calculated as F (N/mm) = f N / 15 mm.

The relevant parameters for Examples A1 to A12 and Comparative Examples A1 to A3 are shown in Table 1 below. In Examples A7 to A12, the second surface of the metal layer was sandblasted to form a rough surface, where the roughness of the second surface is denoted as $R_{Z2}$, and the roughness $R_{Z2}$ for each example is shown in Table 1 below.

**Table 1**

| Example | $G_1$ (%) | Maximum temperature (°C) | $R_{Z2}$ ($\mu$m) | Peel strength F (N/15 mm) |
|---|---|---|---|---|
| Comparative Example A1 | / | 55.8 | / | 7.0 |
| Comparative Example A2 | 0.5 | 54.4 | / | 6.9 |
| Example A1 | 1 | 53.9 | / | 6.8 |
| Example A2 | 3 | 53.8 | / | 6.4 |
| Example A3 | 5 | 53.7 | / | 5.9 |
| Example A4 | 10 | 52.9 | / | 5.5 |
| Example A5 | 20 | 52.3 | / | 4.3 |
| Example A6 | 30 | 51.9 | / | 3.2 |
| Comparative Example A3 | 35 | 51.8 | / | 2.7 |
| Example A7 | 30 | 51.2 | 1 | 3.8 |
| Example A8 | 30 | 50.9 | 2 | 4.1 |
| Example A9 | 30 | 50.6 | 3 | 4.3 |
| Example A10 | 30 | 50.3 | 4 | 4.5 |
| Example A11 | 30 | 50.2 | 5 | 4.7 |
| Example A12 | 30 | 50.4 | 7.5 | 4.6 |
| Example A13 | 1 | 53.1 | 5 | 7.4 |
| Example A14 | 5 | 52.7 | 5 | 6.5 |
| Example A15 | 10 | 52.2 | 5 | 6.0 |
| Example A16 | 20 | 51.7 | 5 | 5.1 |

According to Table 1, with reference to Examples A1 to A12 and Comparative Example A1, it can be seen that when the first thermally conductive material is incorporated into the adhesive layer, the maximum surface temperature of the lithium-ion battery after charging and discharging is significantly reduced. This is because incorporating the first thermally conductive material into the adhesive layer facilitates more effective conduction of heat generated during operation of the lithium-ion battery to the outside, mitigating internal temperature rise of the lithium-ion battery, thereby improving the performance and safety of the secondary battery. Additionally, multiple first thermally conductive materials form multiple heat dissipation channels in the adhesive layer, enabling more uniform heat distribution between the interior of the lithium-ion battery and the packaging bag, reducing localized overheating.

With reference to Examples A1 to A6 and Comparative Example A2, in Comparative Example A2, the mass percentage of the first thermally conductive material is low, which may result in fewer heat dissipation channels in the adhesive layer, leading to insufficient heat dissipation capability. With reference to Comparative Example A3, in Comparative Example A3, the mass percentage of the first thermally conductive material is high, and the maximum temperature is similar to that of Example A6. However, an excessively high mass percentage of the first thermally conductive material may lead to insufficient adhesion capability of the adhesive layer, affecting the overall bonding strength of the packaging bag. Therefore, in this application, selecting a mass percentage of the first thermally conductive material in the adhesive layer of $1\% \leq G_1 \leq 30\%$ can enhance the thermal conductivity of the adhesive layer while ensuring that the adhesive layer maintains superior adhesion performance, improving the heat dissipation performance of the packaging bag and enhancing the bonding strength between the layers of the packaging bag.

In Examples A4 and A5, the peel strength is greater than that in Example A6, and the maximum temperature in Examples A4 and A5 is significantly lower than that in Examples A1 to A3. Therefore, in this application, $10\% \leq G_1 \leq 20\%$ is preferred.

With reference to Examples A6 to A12, in Examples A7 to A12, the roughness is greater than that in Example A6. As shown in Table 1, the maximum surface temperature in Examples A7 to A12 is significantly lower than that in Example A6. This is because increasing the roughness of the metal layer increases the heat exchange area between the metal layer and the adhesive layer, facilitating faster transfer of heat generated during operation of the secondary battery from the encapsulation layer to the metal layer and the adhesive layer, further enhancing the heat dissipation performance of the packaging bag. Additionally, with reference to Examples A7 to A12 and Examples A1 to A5, the peel strength in Examples A7 to A12 is significantly higher than that in Examples A1 to A6. This is because increasing the roughness of the metal layer can enhance the bonding strength between the metal layer and the adhesive layer, improving the encapsulation reliability. When the roughness is too large, the contact area between the metal layer and the adhesive layer or the encapsulation layer is insufficient, reducing the peel strength, thermal conductivity, and heat dissipation performance.

Experiment 2: Incorporation of second thermally conductive material into packaging layer

The relevant parameters for Examples B1 to B6 and Comparative Examples B1 to B3 are shown in Table 2 below. Unlike Example A1, in Examples B1 to B6 and Comparative Examples B1 to B3, the adhesive layer is not provided with the first thermally conductive material, and the packaging layer includes a thermally conductive layer, where the thermally conductive layer has a thickness $T_4$ of 10 μm. A second thermally conductive material (conductive nanotube material) is incorporated into the thermally conductive layer, where a mass percentage of the second thermally conductive material in the thermally conductive layer denoted as $G_2$.

Table 2

| Example | $G_1$ (%) | $G_2$ (%) | Maximum temperature (°C) |
|---|---|---|---|
| Comparative Example B1 | / | / | 55.8 |
| Comparative Example B2 | / | 0.5 | 53.9 |
| Comparative Example B3 | / | 1 | 53.7 |
| Comparative Example B4 | / | 3 | 53.1 |
| Comparative Example B5 | / | 5 | 52.4 |
| Comparative Example B6 | / | 10 | 50.8 |
| Comparative Example B7 | / | 20 | 47.6 |
| Comparative Example B8 | / | 30 | 44.3 |
| Comparative Example B9 | / | 35 | 43.9 |
| Example B1 | 30 | 1 | 43.7 |

(continued)

| Example | $G_1$ (%) | $G_2$ (%) | Maximum temperature (°C) |
|---------|-----------|-----------|--------------------------|
| Example B2 | 30 | 10 | 42.8 |
| Example B3 | 30 | 20 | 42.2 |
| Example B4 | 30 | 30 | 41.8 |

According to Table 2, with reference to Comparative Examples B3 to B8 and Comparative Example B1, it can be seen that when the second thermally conductive material is incorporated into the thermally conductive layer, the maximum surface temperature of the lithium-ion battery after charging and discharging is significantly reduced. This is because incorporating the second thermally conductive material into the thermally conductive layer which is provided in the packaging layer facilitates more effective conduction of heat generated during operation of the lithium-ion battery to the outside, mitigating internal temperature rise of the lithium-ion battery, thereby improving the performance and safety of the secondary battery. Additionally, multiple second thermally conductive materials form multiple heat dissipation channels in the packaging layer, enabling more uniform heat distribution between the interior of the lithium-ion battery and the packaging bag, reducing localized overheating.

With reference to Comparative Examples B3 to B8 and Comparative Example B2, in Comparative Example B2, the mass percentage of the second thermally conductive material is low, which may result in fewer heat dissipation channels in the packaging layer, leading to insufficient heat dissipation capability. With reference to Comparative Example B9, in Comparative Example B9, the mass percentage of the second thermally conductive material is high, and the maximum temperature is similar to that of Comparative Example B8. Considering material costs and the insulation performance of the packaging layer, in this application, selecting a mass percentage of the second thermally conductive material in the thermally conductive layer of $1\% \leq G_2 \leq 30\%$ can enhance the heat dissipation performance of the packaging bag while maintaining superior insulation performance of the packaging material.

In Examples B1 to B4, the maximum temperature is significantly lower than that in Comparative Examples B1 to B9. This is because the adhesive layer including the first thermally conductive material is disposed between the metal layer and the packaging layer, where the first thermally conductive material forms a heat transfer path between the metal layer and the packaging layer, further facilitating fast heat transfer between the metal layer and the packaging layer, thereby further improving the heat dissipation performance of the packaging bag.

Experiment 3: Surface roughness treatment of metal layer

The relevant data for Examples C1 to C5 and Comparative Examples C1 to C3 are shown in Table 3 below. Unlike Example A1, in Examples C1 to C5 and Comparative Examples C1 to C3, the adhesive layer is not added with the first thermally conductive material, and the packaging layer is not added with the second thermally conductive material. The first surface and the second surface of the metal layer are sandblasted to form rough surfaces, where the roughness of the first surface is denoted as $R_{Z1}$, and the roughness of the second surface is denoted as $R_{Z2}$.

Table 3

| Example | $R_{Z1}$ (μm) | $R_{Z2}$ (μm) | Maximum temperature (°C) |
|---------|---------------|---------------|--------------------------|
| Example C1 | 1 | 1 | 53.1 |
| Example C2 | 2 | 2 | 52.6 |
| Example C3 | 2 | 3 | 52.2 |
| Example C4 | 2 | 5 | 51.8 |
| Example C5 | 3 | 5 | 51.5 |
| Example C6 | 5 | 5 | 51.2 |
| Example C7 | 7.5 | 5 | 51.3 |
| Example C8 | 2 | 7.5 | 52.1 |

According to Table 3, with reference to Examples C2 to C6 and Example C1, in Example C1, the surface roughness of the metal layer is too low, resulting in insufficient contact area with the encapsulation layer and the adhesive layer, which may lead to poor heat dissipation effect. In Examples C7 and C8, the surface roughness of the metal layer is too large, which may cause failure of an adhesive interface between the metal layer and the adhesive layer and/or the encapsulation layer, and the large roughness may affect the stamping performance of the packaging bag. As compared to Example C6, the heat dissipation performance in Examples C7 and C8 shows little improvement or no improvement. With reference to Examples C2 to C6, in this application, selecting $2\ \mu m \leq R_{Z1} \leq 5\ \mu m$ and $2\ \mu m \leq R_{Z2} \leq 5\ \mu m$ can enhance the heat dissipation effect of the packaging bag while enhancing the bonding strength between the metal layer and the encapsulation layer and the adhesive layer, reducing the impact on the stamping performance of the packaging bag.

The relevant data for Examples D1 to D3 are shown in Table 4 below.

**Table 4**

| Example | $G_1$ (%) | $G_2$ (%) | $R_{Z1}$ ($\mu$m) | $R_{Z2}$ ($\mu$m) | Maximum temperature (°C) |
|---|---|---|---|---|---|
| Example D1 | 30 | 30 | 1 | 2 | 41.5 |
| Example D2 | 30 | 30 | 2 | 2 | 41.3 |
| Example D3 | 30 | 30 | 3 | 3 | 40.8 |
| Example D4 | 30 | 30 | 4 | 4 | 40.2 |
| Example D5 | 30 | 30 | 5 | 5 | 39.7 |
| Example D6 | 30 | 30 | 6 | 2 | 41.1 |
| Example D7 | 30 | 30 | 2 | 6 | 39.9 |

With reference to Table 4 and Tables 1 to 3, it can be seen that when the first thermally conductive material is incorporated into the adhesive layer, the second thermally conductive material is incorporated into the thermally conductive layer of the packaging layer, and the roughness of the metal layer is increased, the maximum surface temperature of the lithium-ion battery can be significantly reduced. By incorporating the first thermally conductive material into the adhesive layer, incorporating the second thermally conductive material into the thermally conductive layer of the packaging layer, and increasing the roughness of the metal layer, the heat dissipation performance of the packaging bag can be improved, and the service life of the lithium-ion battery is extended. Additionally, when $2\ \mu m \leq R_{Z2} \leq 5\ \mu m$, the maximum temperature is significantly reduced, exhibiting a significant heat dissipation effect.

Experiment 4: Impact of layer thickness on heat dissipation

Taking the above examples as a reference, based on (a mass percentage of the first thermally conductive material in the adhesive layer is 30%, a mass percentage of the second thermally conductive material in the thermally conductive layer is 30%, a thickness of the thermally conductive layer is 30% of a thickness of the packaging layer, $R_{Z1}$ of the metal layer is equal to 5 $\mu$m, and $R_{Z2}$ of the metal layer is equal to 5 $\mu$m), different thicknesses are set for the adhesive layer and the metal layer of the packaging bag. The relevant parameters are shown in Table 5 below.

Table 5

| Example | $T_1$ ($\mu$m) | $T_1/T$ (%) | $T_2$ ($\mu$m) | $T_2/T$ (%) | $T_3$ ($\mu$m) | $T_3/T$ (%) | Maximum temperature (°C) |
|---|---|---|---|---|---|---|---|
| Example E1 | 15 | 15 | 5 | 5 | 30 | 30 | 42.7 |
| Example E2 | 20 | 20 | 5 | 5 | 30 | 30 | 41.8 |
| Example E3 | 25 | 25 | 5 | 5 | 30 | 30 | 41.2 |
| Example E4 | 30 | 30 | 5 | 5 | 30 | 30 | 40.6 |
| Example E5 | 40 | 40 | 5 | 5 | 30 | 30 | 39.5 |
| Example E6 | 50 | 50 | 5 | 5 | 30 | 30 | 38.3 |
| Example E7 | 60 | 60 | 5 | 5 | 20 | 20 | 39.6 |
| Example E8 | 70 | 70 | 5 | 5 | 10 | 10 | 41.3 |
| Example E9 | 80 | 80 | 5 | 5 | 5 | 5 | 41.8 |
| Example E10 | 30 | 30 | 1 | 1 | 30 | 30 | 42.3 |
| Example E11 | 30 | 30 | 2 | 2 | 30 | 30 | 41.9 |
| Example E12 | 30 | 30 | 3 | 3 | 30 | 30 | 41.4 |

(continued)

| Example | $T_1$ (μm) | $T_1/T$ (%) | $T_2$ (μm) | $T_2/T$ (%) | $T_3$ (μm) | $T_3/T$ (%) | Maximum temperature (°C) |
|---|---|---|---|---|---|---|---|
| Example E13 | 30 | 30 | 4 | 4 | 30 | 30 | 40.9 |
| Example E14 | 30 | 30 | 6 | 6 | 30 | 30 | 40.0 |
| Example E15 | 30 | 30 | 7 | 7 | 30 | 30 | 39.5 |
| Example E16 | 30 | 30 | 8 | 8 | 30 | 30 | 39.3 |

According to Table 5, with reference to Examples E1 to E9, in Example E1, an excessively small thickness of the metal layer results in insufficient thermal conduction capability. In Example E9, the metal layer is thicker, affecting the stamping performance of the packaging bag and the weight of the packaging bag, and the temperature difference between Example E9 and Example E8 is small. Therefore, in some embodiments of this application, $20\% \leq T_1/T \leq 70\%$ is selected. With reference to Examples E4 to E7, $30\% \leq T_1/T \leq 60\%$ is preferred.

With reference to Examples E10 to E16, $T_2/T \geq 1\%$, which enhances the adhesion strength. The difference between Example E16 and Example E15 is small, and in Example E16, the thicker adhesive layer not only affects the energy density of the lithium-ion battery but also may cause flow casting during hot-pressing encapsulation, affecting the dimensional accuracy of the secondary battery. Therefore, in this application, selecting $1\% \leq T_2/T \leq 7\%$ can enhance the adhesion strength while reducing the impact of the adhesive layer on the dimensional accuracy and energy density of the secondary battery.

Regarding the thickness $T_3$ of the packaging layer and the thickness $T_4$ of the thermally conductive layer, the first thermally conductive material is incorporated into the adhesive layer, the second thermally conductive material is incorporated into the thermally conductive layer, the thermally conductive layer can be configured similarly with reference to the adhesive layer in which the first thermally conductive material is incorporated.

In conclusion, it should be noted that the above embodiments are only used to illustrate the technical solutions of this application and not to limit them. Under the concept of this application, technical features in the above embodiments or different embodiments can be combined, steps can be implemented in any order, and there are many other variations of different aspects of this application as described above, which are not provided in detail for brevity. Although this application has been described in detail with reference to the foregoing embodiments, those skilled in the art should understand that modifications can still be made to the technical solutions described in the foregoing embodiments, or equivalent replacements can be made to some technical features recorded in the foregoing embodiments. These modifications or replacements do not cause the essence of the corresponding technical solutions to depart from the scope of the technical solutions of some embodiments of this application.

**Claims**

1. A packaging bag (10), comprising an encapsulation layer (11), a metal layer (12), an adhesive layer (13), and a packaging layer (14) arranged in a stacked manner, wherein
the adhesive layer (13) comprises a first thermally conductive material (131), a mass percentage of the first thermally conductive material (131) in the adhesive layer (13) is denoted as G1, and $1\% \leq G1 \leq 30\%$.

2. The packaging bag (10) according to claim 1, wherein $10\% \leq G1 \leq 20\%$.

3. The packaging bag (10) according to claim 1, wherein the packaging layer (14) comprises a thermally conductive layer (141) and a surface layer (142) arranged in a stacked manner, the thermally conductive layer (141) is located between the surface layer (142) and the adhesive layer (13), the thermally conductive layer (141) comprises a second thermally conductive material (1411), a mass percentage of the second thermally conductive material (1411) in the thermally conductive layer (141) is denoted as G2, and $1\% \leq G2 \leq 30\%$.

4. The packaging bag (10) according to any one of claims 1 to 3, wherein the metal layer (12) comprises a first surface (121) facing the encapsulation layer (11) and a second surface (122) facing the adhesive layer (13); and a roughness of the first surface (121) is denoted as RZ1, and $2\,\mu m \leq RZ1 \leq 5\,\mu m$; and/or, a roughness of the second surface (122) is denoted as RZ2, and $2\,\mu m \leq RZ2 \leq 5\,\mu m$.

5. The packaging bag (10) according to claim 4, wherein a peel strength between the metal layer (12) and the packaging layer (14) is denoted as F, and $4.1\ N/15\ mm \leq F \leq 7.4\ N/15\ mm$.

6.  The packaging bag (10) according to claim 1, wherein a thickness of the metal layer (12) is denoted as T1, a thickness of the adhesive layer (13) is denoted as T2, a thickness of the packaging layer (14) is denoted as T3, a thickness of the packaging bag (10) is denoted as T, at least one of the following conditions is met:

    (1)

    $$20\% \leqslant T1/T \leqslant 70\%;$$

    (2)

    $$1\% \leqslant T2/T \leqslant 7\%;$$

    (3)

    $$3\% \leqslant T3/T \leqslant 40\%.$$

7.  The packaging bag (10) according to claim 6, wherein $30\% \leq T1/T \leq 60\%$.

8.  The packaging bag (10) according to claim 3, wherein the packaging layer (14) further comprises an inner layer (143), and the inner layer (143) is disposed on a surface of the thermally conductive layer (141) facing the adhesive layer (13).

9.  The packaging bag (10) according to claim 8, wherein a thickness of the inner layer (143) is denoted as T4, a thickness of the packaging layer (14) is denoted as T3, and $1\% \leq T4/T3 \leq 10\%$.

10. The packaging bag (10) according to claim 8, wherein the inner layer (143) comprises at least one of nylon, polyethylene terephthalate, polybutylene terephthalate, or polyimide.

11. The packaging bag (10) according to any one of claims 3 to 10, wherein the first thermally conductive material (131) comprises at least one of graphite, conductive carbon fiber, conductive nanotubes, graphene, or metal powder, and/or, the second thermally conductive material (1411) comprises at least one of graphite, conductive carbon fiber, conductive nanotubes, graphene, or metal powder.

12. A packaging bag (10), comprising an encapsulation layer (11), a metal layer (12), an adhesive layer (13), and a packaging layer (14) arranged in a stacked manner, wherein the packaging layer (14) comprises a thermally conductive layer (141) and a surface layer (142) arranged in a stacked manner, the thermally conductive layer (141) is located between the surface layer (142) and the adhesive layer (13), the thermally conductive layer (141) comprises a second thermally conductive material (1411), a mass percentage of the second thermally conductive material (1411) in the thermally conductive layer (141) is denoted as G2, and $1\% \leq G2 \leq 30\%$.

13. The packaging bag (10) according to claim 12, wherein the metal layer (12) comprises a first surface (121) facing the encapsulation layer (11) and a second surface (122) facing the adhesive layer (13); a roughness of the first surface (121) is denoted as RZ1, and $2\,\mu m \leq RZ1 \leq 5\,\mu m$; and/or, a roughness of the second surface (122) is denoted as RZ2, and $2\,\mu m \leq RZ2 \leq 5\,\mu m$.

14. A packaging bag (10), comprising an encapsulation layer (11), a metal layer (12), an adhesive layer (13), and a packaging layer (14) arranged in a stacked manner, wherein the metal layer (12) comprises a first surface (121) facing the encapsulation layer (11) and a second surface (122) facing the adhesive layer (13); and a roughness of the first surface (121) is denoted as RZ1, and $2\,\mu m \leq RZ1 \leq 5\,\mu m$; and/or, a roughness of the second surface (122) is denoted as RZ2, and $2\,\mu m \leq RZ2 \leq 5\,\mu m$.

15. A secondary battery (100), comprising an electrode assembly (20), a tab (30), and the packaging bag (10) according to any one of claims 1 to 14, wherein the packaging bag (10) encloses an accommodating cavity (10c), the electrode assembly (20) is disposed in the accommodating cavity (10c) of the packaging bag (10), one end of the tab (30) is electrically connected to the electrode assembly (20), and the other end of the tab (30) extends out of the packaging bag (10).

FIG. 1

FIG. 2

FIG. 3

<u>10</u>

10a  11a  12a  13a  14a  10c1

FIG. 4

14  13  122  T₃

T  T₂  T₁

11  12  121

FIG. 5

13

131

T₂

FIG. 6

14

141    142    13    122

11    12    121

FIG. 7

14

1411    141    142

FIG. 8

14

141 143 142 13 122

T3

T4

11 12 121

FIG. 9

14

1411 141 143 142

FIG. 10

Europäisches
Patentamt

European
Patent Office

Office européen
des brevets

## EUROPEAN SEARCH REPORT

**Application Number**

EP 25 20 3201

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2021 0048409 A (KOREA ALUMINIUM CO LTD [KR]) 3 May 2021 (2021-05-03) * paragraphs [0036] - [0052]; claims 1-13; figures 1-4; table 1 * | 1-15 | INV. H01M50/105 H01M50/124 H01M50/131 H01M50/126 |
| X | KR 2017 0142624 A (BTL ADVANCED MATERAL CO LTD [KR]) 28 December 2017 (2017-12-28) * paragraphs [0024] - [0030]; claims 1-5; figure 1; examples 1,2; tables 1,2 * | 1-15 | ADD. H01M10/653 |
| X | EP 4 228 062 A1 (HUAWEI TECH CO LTD [CN]) 16 August 2023 (2023-08-16) | 14,15 | |
| A | * paragraphs [0009] - [0011], [0050] - [0055], [0074], [0075]; claims 1-21; figures 1-11 * | 1-13 | |
| A | LE H R ET AL: "Analysis of surface roughness of cold-rolled aluminium foil", WEAR, ELSEVIER SEQUOIA, LAUSANNE, CH, vol. 244, 1 January 2000 (2000-01-01), pages 71-78, XP007921605, ISSN: 0043-1648, DOI: 10.1016/S0043-1648(00)00441-5 * abstract; figures 4a, 4b * | 1-15 | |
| A | CN 113 745 717 A (TAN KAH KEE INNOVATION LABORATORY) 3 December 2021 (2021-12-03) * claims 1-10; figure 1 * | 1-15 | TECHNICAL FIELDS SEARCHED (IPC) H01M |
| A | US 2023/080891 A1 (CHEN CONGRONG [CN] ET AL) 16 March 2023 (2023-03-16) * claims 1-16; figures 1-5 * | 1-15 | |

The present search report has been drawn up for all claims

| Place of search | Date of completion of the search | Examiner |
|---|---|---|
| Munich | 10 February 2026 | Catana, Cosmin |

## ANNEX TO THE EUROPEAN SEARCH REPORT
## ON EUROPEAN PATENT APPLICATION NO.

EP 25 20 3201

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | | Publication date | Patent family member(s) | | Publication date |
|---|---|---|---|---|---|
| KR 20210048409 | A | 03-05-2021 | NONE | | |
| KR 20170142624 | A | 28-12-2017 | NONE | | |
| EP 4228062 | A1 | 16-08-2023 | CN | 114497833 A | 13-05-2022 |
| | | | EP | 4228062 A1 | 16-08-2023 |
| | | | US | 2024063478 A1 | 22-02-2024 |
| | | | WO | 2022100589 A1 | 19-05-2022 |
| CN 113745717 | A | 03-12-2021 | NONE | | |
| US 2023080891 | A1 | 16-03-2023 | CN | 115461912 A | 09-12-2022 |
| | | | EP | 4152487 A1 | 22-03-2023 |
| | | | US | 2023080891 A1 | 16-03-2023 |
| | | | WO | 2021227073 A1 | 18-11-2021 |

EPO FORM P0459

For more details about this annex : see Official Journal of the European Patent Office, No. 12/82